# EUROPÄISCHE PATENTSCHRIFT

(11) **EP 2 105 617 B1**
(45) Veröffentlichungstag und Bekanntmachung des Hinweises auf die Patenterteilung: **18.01.2012**
(21) Anmeldenummer: 09002159.3
(22) Anmeldetag: 16.02.2009
(51) Int. Cl.: F16B 5/06, F16B 21/07

(54) **Befestigungsanordnung**
Mounting assembly
Agencement de fixation

(30) Priorität: 26.03.2008 DE 202008004151 U
(43) Veröffentlichungstag der Anmeldung: 30.09.2009
(73) Patentinhaber: Böllhoff Verbindungstechnik GmbH, 33649 Bielefeld (DE)
(72) Erfinder: Vorderwisch, Alexander, 33613 Bielefeld (DE); Metten, Andreas, 33775 Versmold (DE); Bertram, Andreas, 32049 Herford (DE)
(74) Vertreter: Heyer, Volker

(56) Entgegenhaltungen:
- EP-A1- 0 648 944
- WO-A2-2008/117070
- US-A1- 2002 197 107

## Beschreibung

### 1. Gebiet der Erfindung

Die vorliegende Erfindung betrifft eine Befestigungsanordnung für ein Flächenelement, insbesondere für eine Schutzplatte im Flugzeugbau, die sich aus einem Basiselement und einem Kopplungselement zusammensetzt.

### 2. Hintergrund der Erfindung

Bisher werden Flugzeugrümpfe mit Hilfe von Aluminiumblechen hergestellt. Diese Aluminiumbleche verfüllen eine Schutzfunktion gegenüber Witterung und beispielsweise Steinschlag bei Start und Landung. Diese mechanischen Belastungen werden durch Energieabsorption in den Aluminiumblechen abgefangen. Dabei verbiegen sich die Aluminiumbleche oder beulen aus und schützen die darunter liegende Rumpfstruktur.

Sowohl im Flugzeugbau wie auch in anderen technischen Gebieten setzt sich zunehmend CFK, also kohlenstofffaserverstärkter Kunststoff, durch. Dies gilt beispielsweise für Rumpfteile von Flugzeugen wie auch für Karosserieteile von Hochgeschwindigkeitszügen oder Kraftfahrzeugen. Der Einsatz von CFK dient einerseits der Gewichtsreduktion der Rumpfteile sowie einer Verbesserung der Stabilität dieser Teile.

CFK ist jedoch empfindlich gegenüber mechanischen Belastungen. Zum Beispiel führen auftreffende Steinchen an einem CFK-Flugzeugrumpf zu einer Zerstörung der inneren Schichtstrukturen des CFK-Bauteils. Derartige Zerstörungen oder Schädigungen können zum vollständigen Versagen des CFK-Bauteils führen. Sie sind zudem von außen nicht erkennbar, was eine Schadensanalyse der CFK-Bauteile erschwert. Es besteht daher die Notwendigkeit, die CFK-Bauteile zu schützen, um ihre Lebensdauer zu erhöhen. Zu diesem Zweck werden Schutzplatten vor den Rumpf-Bauteilen im Flugzeugbau installiert.

EP 0 648 944 A1 beschreibt ein Verbindungselement aus Kunststoff mit einem einteilig halternden Haltebereich und einem mit einem Träger, insbesondere einer Kraftfahrzug-Karosserie, zu verbindenden Befestigungsbereich, wobei zwischen dem Teil und dem Träger ein Toleranzausgleich vorgesehen ist. Der Haltebereich und der Befestigungsbereich sind durch mindestens zwei spiralförmig verlaufende elastische Arme zum Toleranzausgleich innerhalb einer Ebene in den in der Trägerebene liegenden Richtungen verbunden.

US 2002/0197107 A1 beschreibt ein flächiges Basiselement, an dem eine Buchse zur Aufnahme eines Kugelkopfs angeordnet ist. Der Kugelkopf ist mit einer Klebefläche verbunden, sodass er an einem weiteren Teil befestigt werden kann. Über die Beweglichkeit des Kugelkopfes innerhalb der Buchse können winklige Ausrichtungen zwischen zwei aneinander zu befestigenden Teilen ausgeglichen werden.

Es ist die Aufgabe der vorliegenden Erfindung, eine passende Befestigungsanordnung für beispielsweise derartige Schutzplatten und ein Befestigungsverfahren bereitzustellen, die/das verlässlich und einfach die Schutzplatten mit beispielsweise einer Rumpfstruktur im Flugzeugbau verbindet.

### 3. Zusammenfassung der Erfindung

Die obige Aufgabe wird durch eine Befestigungsanordnung für ein Flächenelement, insbesondere eine Schutzplatte im Flugzeugbau, gemäß dem unabhängigen Patentanspruch 1 gelöst. Diese Befestigungsanordnung setzt sich aus einem Basiselement und einem Kopplungselement zusammen. Zudem wird die obige Aufgabe durch ein Befestigungsverfahren gemäß Anspruch 7 gelöst. Weitere vorteilhafte Ausgestaltungen vorliegender Erfindung ergeben sich aus der Beschreibung, den begleitenden Zeichnungen und den anhängenden Ansprüchen.

Die erfindungsgemäße Befestigungsanordnung für ein Flächenelement, insbesondere eine Schutzplatte im Flugzeugbau, umfasst ein Basiselement und ein Kopplungselement, die über eine lösbare oder eine nicht lösbare Schnappverbindung aneinander befestigbar sind. Das Basiselement dieser zweiteiligen Befestigungsanordnung weist die folgenden Merkmale auf: das Basiselement ist zweiseitig ausgebildet mit einer Befestigungsfläche an seiner ersten Seite und einem von seiner zweiten Seite vorstehenden Verbindungszapfen, mit dem eine Schnappverbindung zum Kopplungselement herstellbar ist. Das Kopplungselement dieser zweiteiligen Befestigungsanordnung umfasst folgende Merkmale: das Kopplungselement ist ebenfalls zweiseitig ausgebildet mit einer Befestigungsfläche an seiner ersten Seite und einer Zapfenaufnahme für den Verbindungszapfen des Basiselements an seiner zweiten Seite, während das Kopplungselement eine Öffnung aufweist, in der die Zapfenaufnahme federnd angeordnet ist.

Das Basiselement und das Kopplungselement sind jeweils als flächige Bauteile vorgesehen. Diese Bauteile weisen eine geringe Dicke gegenüber ihrer flächigen Ausdehnung auf, so dass man sie als nur zweiseitige Bauteile bezeichnen kann. Sowohl das Basiselement wie auch das Kopplungselement weisen eine Befestigungsfläche auf. Diese Befestigungsfläche ist dazu geeignet und angepasst, um eine Klebeverbindung zu angrenzenden weiteren Bauteilen herstellen zu können. Während das Basiselement einen Verbindungszapfen aufweist, umfasst das Kopplungselement eine passend zum Verbindungszapfen ausgebildete Zapfenaufnahme, so dass das Basiselement und das Kopplungselement über diese lösbare oder nicht lösbare Schnappverbindung durch Zusammendrücken auf einfache Weise miteinander verbindbar sind. Es wird daher auf eine Schutzplatte für einen CFK-Flugzeugrumpf eine Mehrzahl von Basiselementen aufgeklebt. In gleicher Anordnung wie die Basiselemente werden die passenden Kopplungselemente auf den CFK-Rumpf geklebt. Zur Befestigung der Schutzplatte am CFK-Rumpf werden die einzelnen Basiselemente in den dazu passenden Kopplungselementen über die Schnappverbindung verriegelt und somit befestigt.

Gemäß einer bevorzugten Ausführungsform des Basiselements ist der Verbindungszapfen mit einem Hinterschnitt und einer Haltefläche ausgestattet und über eine Mehrzahl von Stegen am Basiselement befestigt, während die Befestigungsfläche zum Herstellen einer Klebeverbindung ausgelegt ist. Die Mehrzahl von Stegen des Verbindungszapfens ist gemäß einer bevorzugten Ausführungsform an einer inneren Stirnfläche einer Öffnung in der Befestigungsfläche des Basiselements befestigt. Zudem schließt die Haltefläche des Hinterschnitts des Verbindungszapfens mit zumindest einem der Stege einen Winkel zwischen 90° und 120° ein, vorzugsweise einen Winkel von 90° oder 100° bis 110°.

In passender Ausbildung zum Verbindungszapfen umfasst das Kopplungselement bevorzugt eine Mehrzahl von federnd angeordneten Schnapphaken mit einer Haltefläche, während die Haltefläche mit der Längsachse des Schnapphakens einen Winkel von 90° bis 120° einschließt, vorzugsweise einen Winkel von 90° oder 100° bis 110°.

Über die geeignete Wahl der Anzahl und Anordnung der Schnapphaken ist die Stärke der Verbindung zwischen Verbindungszapfen und Zapfenaufnahme, also zwischen Kopplungselement und Basiselement einstellbar. Zudem lässt sich über die winklige Anordnung der Halteflächen von Verbindungszapfen und Schnapphaken gegenüber der jeweiligen Längsachse festlegen, ob die zwischen Basiselement und Kopplungselement hergestellte Schnappverbindung lösbar oder nicht lösbar ist. Schließen Haltefläche und Längsache vom Verbindungszapfen bzw. Schnapphaken einen rechten Winkel ein, ist die Schnappverbindung nicht mehr durch einfaches Abziehen des Basiselements vom Kopplungselement lösbar. Wird jedoch ein Winkel von ca. 100° bis 110° oder größer zwischen der Längsachse des Verbindungszapfens und/oder des Schnapphakens und der jeweiligen Haltefläche eingestellt, ist der Verbindungszapfen des Basiselements aus der Zapfenaufnahme des Kopplungselements herausziehbar. Diese Art der Konstruktion von Verbindungszapfen und Zapfenaufnahme ermöglicht somit ein zerstörungsfreies Verbinden und Lösen von Basiselement und Kopplungselement der Befestigungsanordnung.

Eine weitere vorteilhafte Ausgestaltung des Kopplungselements weist eine Öffnung mit einer inneren Stirnfläche auf, an der spiralförmig verlaufende Stege befestigt sind, die die Zapfenaufnahme in alle drei Raumrichtungen federnd halten. Zudem ist es bevorzugt, die Zapfenaufnahme außerhalb der Ebene der Befestigungsfläche des Kopplungselements anzuordnen, um eine Bewegung der Zapfenaufnahme senkrecht zur Befestigungsfläche zu gestatten.

Das erfindungsgemäße Verfahren zum Befestigen eines zu befestigenden Teils mittels einer Befestigungsanordnung an einem tragenden Teil, beispielsweise zum Befestigen von Schutzplatten an einem CFK-Flugzeugrumpf oder zum Halten von Karosserie- oder Verkleidungsteilen an Fahrzeugen, umfasst die folgenden Schritte: a. Kleben einer Mehrzahl von Basiselementen, insbesondere Basiselemente gemäß obiger Beschreibung, in vordefinierter Anordnung auf eine Rückseite eines zu befestigenden Teils, insbesondere die Schutzplatte, b. Kleben einer Mehrzahl von Kopplungselementen, insbesondere Kopplungselemente gemäß der vorangegangenen Beschreibung, in einer der vordefinierten Anordnung entsprechenden Anordnung auf eine Außenseite eines tragenden Teils, insbesondere die Außenseite eines CFK-Rumpfteils, und c. Befestigen des zu befestigenden Teils am tragenden Teil, insbesondere die Schutzplatte am CFK-Rumpfteil, indem durch Aufbringen einer Druckkraft senkrecht zur Fläche des zu befestigenden Teils, insbesondere der Schutzplatte, einzelne Verbindungszapfen der Basiselemente in gegenüberliegend angeordneten Zapfenaufnahmen der Kopplungselemente eingerastet werden.

Durch das Befestigungsverfahren werden vorzugsweise Flächenelemente an tragenden Teilen befestigt. Während die die Verbindung ermöglichenden Teile Basiselement und Kopplungselement auf das tragende und das zu befestigende Teil aufgeklebt werden, erfolgt das Befestigen des zu befestigenden Teils durch Herstellen einer einfachen Rastverbindung. In umgekehrter Richtung ist es auf einfache Weise möglich, das zu befestigende Teil wieder vom tragenden Teil zu lösen, in dem die Rastverbindung gelöst wird.

### 4. Kurze Beschreibung der begleitenden Zeichnungen

Die vorliegende Erfindung und bevorzugte Ausführungsformen werden unter Bezugnahme auf die begleitende Zeichnung näher erläutert. Es zeigen:
- Fig. 1: eine bevorzugte Ausführungsform der Befestigungsanordnung mit Basiselement und Kopplungselement in einer Explosionsdarstellung,
- Fig. 2: die Befestigungsanordnung aus Fig. 1 in einer anderen Ansicht,
- Fig. 3: eine Ausschnittsvergrößerung des Basiselements gemäß Fig. 1,
- Fig.4: eine Ausschnittsvergrößerung des Verbindungszapfens des Basiselements aus Fig. 1,
- Fig.5: eine weitere Darstellung des Verbindungszapfens aus Fig. 1,
- Fig. 6: eine Ausschnittsvergrößerung des Kopplungselements aus Fig. 1,
- Fig. 7: eine weitere Ausschnittsvergrößerung des Kopplungselements aus Fig. 1,
- Fig. 8: eine vergrößerte Darstellung der Zapfenaufnahme aus Fig. 1,
- Fig. 9: eine vergrößerte Darstellung der Anbindung der spiralförmigen Stege aus Fig. 1 und
- Fig. 10: eine seitliche Darstellung eines Ausschnitts des Kopplungselements mit Schnapphaken aus Fig. 1.

### 5. Detaillierte Beschreibung bevorzugter Ausführungsformen

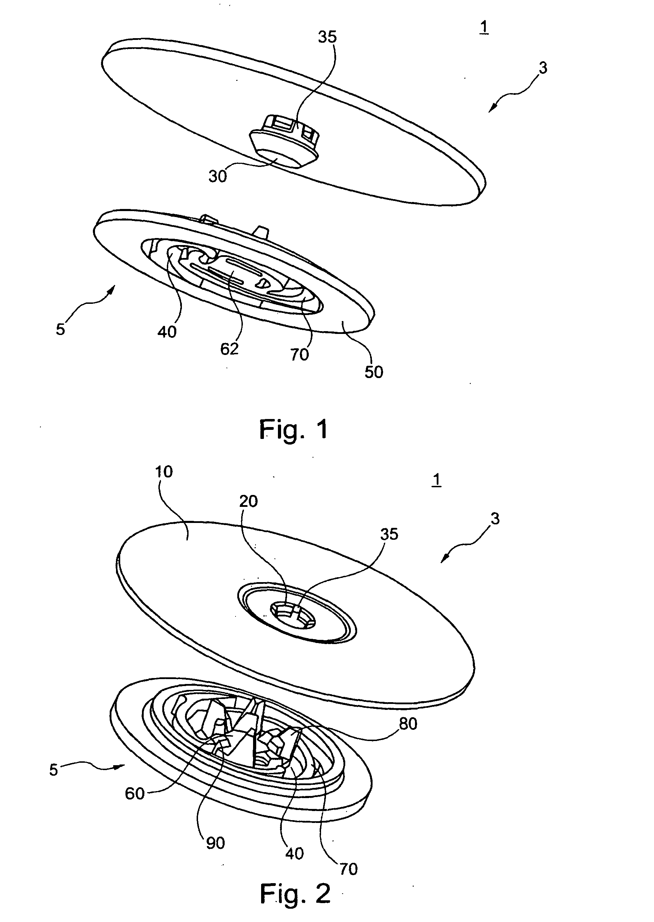

Die Figuren 1 und 2 zeigen jeweils eine Explosionsansicht einer bevorzugten Ausführungsform der erfindungsgemäßen Befestigungsanordnung 1. Die Befestigungsanordnung 1 besteht aus einem Basiselement 3 und einem Kopplungselement 5. Das Basiselement 3 und das Kopplungselement 5 sind aus Thermoplasten oder ähnlichen Werkstoffen hergestellt. Vorzugsweise wird ein schlagzäh modifiziertes Polyamid mit Glasfaseranteil genutzt. Gemäß einer anderen Alternative ist es ebenfalls bevorzugt, in Abhängigkeit von den Anforderungen an die Befestigungsanordnung eine andere Verstärkung als den Glasfaseranteil einzusetzen, den Verstärkungsanteil im Material zu variieren oder vollständig auf die Verstärkung zu verzichten.

Das Basiselement 3 genauso wie das Kopplungselement 5 sind im Wesentlichen zweiseitig ausgebildet. Das bedeutet, dass die Dicke beider Teile 3, 5 klein ist im Vergleich zur lateralen Ausdehnung bzw. zu den lateralen Dimensionen des Basiselements 3 und des Kopplungselements 5. Weiterhin besitzen das Basiselement 3 und das Kopplungselement 5 gemäß der hier gezeigten Ausführungsform eine kreisförmige Grundfläche von ca. 35 - 40 mm Durchmesser, wie beispielsweise ein Teller. Es sind jedoch ebenfalls andere Formen für das Basiselement 3 und das Kopplungselement 5 denkbar.

Das Basiselement 3 umfasst eine Befestigungsfläche 10, während die Befestigungsfläche des Kopplungselements 5 mit 50 bezeichnet ist. Beide Befestigungsflächen 10, 50 sind vorzugsweise angepasst, um eine Klebeverbindung mit dem angrenzenden Teil herzustellen. Zu diesem Zweck weisen die Befestigungsflächen 10, 50 eine glatte oder raue Oberfläche auf, sind mit einer geeigneten Profilierung versehen oder mit einer passenden Grundierung beschichtet. Über diese Befestigungsflächen 10, 50 wird gemäß eines Anwendungsfalls das Basiselement 3 auf eine Schutzplatte (nicht gezeigt) aufgeklebt. Das Kopplungselement 5 wird auf einen CFK-Flugzeugrumpf (nicht gezeigt) aufgeklebt, um über die Befestigungsanordnung 1 die Schutzplatte am CFK-Flugzeugrumpf lösbar oder nicht lösbar zu befestigen.

Zum Herstellen der jeweiligen Klebeverbindung dienen beispielsweise doppelseitig klebende Klebepads, mit UV-Licht aktivierbarer Klebstoff oder ähnliche Alternativen, die eine verlässliche Verbindung gewährleisten.

Neben dem verlässlichen Halten von Schutzplatten an CFK-Teilen oder ähnlichen Anwendungen dient die Befestigungsanordnung 1 als Energieabsorber und Toleranzausgleich. Diese Funktionen werden durch bestimmte konstruktive Merkmale des Basiselements 3 und des Kopplungselements 5 realisiert. Die Energieabsorption dient dem Schutz der mit dem Kopplungselement 5 verbundenen CFK-Teile. Sie sorgt dafür, dass beispielsweise ein mechanischer Energieeintrag über Steinschlag an der Schutzplatte nicht über das Basiselement 3 und das Kopplungselement 5 auf das CFK-Teil übertragen wird. Stattdessen versagen als Sollbruchstellen ausgelegte Stege 35 des Verbindungszapfens 30 oder weicht die Zapfenaufnahme 60 federnd aus. Diese konstruktiven Details und Funktionen sind unten näher erläutert.

Ein Toleranzausgleich zwischen Schutzplatte und CFK-Bauteil ist unter anderem aufgrund der Temperaturunterschiede bei Flugzeugen am Boden und in der Luft nützlich. Die Temperaturunterschiede führen zu unterschiedlichen Dehnungen aneinander angrenzender Materialien, was mechanische Spannungen in der Befestigungsanordnung 1 erzeugt. Diese mechanischen Spannungen werden unter anderem durch die die Zapfenaufnahme 60 haltenden spiralförmig verlaufenden Stege 70 ausgeglichen (siehe unten). Somit eignet sich für das Basiselement 3 und das Kopplungselement 5 ein festes Material mit federnden Eigenschaften, das nicht spröde versagt.

Das zweiseitige Basiselement 3 umfasst eine Öffnung 20, die vorzugsweise mittig in dem tellerförmigen Basiselement 3 angeordnet ist. Oberhalb dieser Öffnung 20 ist der Verbindungszapfen 30 angeordnet. Der Verbindungszapfen 30 steht somit an der Seite des Basiselements 3 vor, die von der Befestigungsfläche 10 abgewandt liegt. Der Verbindungszapfen 30 ist über eine Mehrzahl von Stegen 35 mit dem Basiselement 3 verbunden. Es ist ebenfalls bevorzugt, das Basiselement 3 ohne die Öffnung 20 vorzusehen.

Die Anzahl und die Dimensionen der Stege 35 legen fest, welchen mechanischen Belastungen der Verbindungszapfen 30 ohne abzubrechen standhalten kann. Derartige mechanische Belastungen entstehen durch Steinschlag auf die Schutzplatte, die an die Befestigungsfläche 10 angeklebt ist. Die mechanischen Belastungen erzeugen Druckkräfte in Richtung der Längsachse des Verbindungszapfens 30 und daher auch in Richtung der Längsachse der Stege 35. Ist keine Öffnung 20 im Basiselement 30 vorgesehen, erzeugen diese mechanischen Belastungen eine Stauchung der Stege 35. Bei ausreichend hoher Belastung versagen die Stege 35 aufgrund dieser Stauchung, wodurch Energie absorbiert und das CFK-Rumpfteil nicht durch diese Energie belastet wird. Die mechanischen Belastungen für unterschiedliche Anwendungsfälle der Befestigungsanordnung 1 sind bekannt. Daher lassen sich die Dimensionen der Stege 35 derart einstellen, dass die Stege 35 versagen, bevor zu große mechanische Lasten an beispielsweise ein CFK-Rumpfteil übertragen werden.

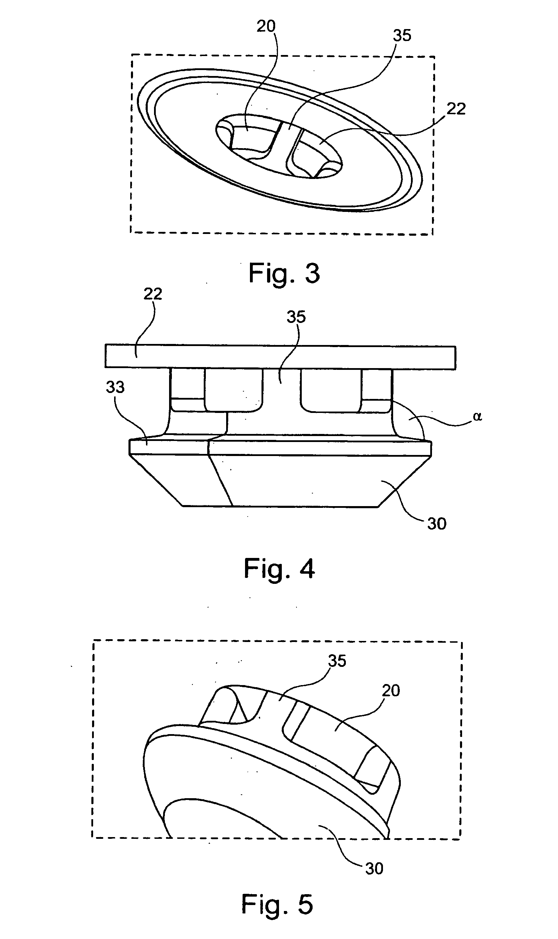

Gemäß einer weiteren Ausführungsform ist die Öffnung 20 mit einer inneren Stirnfläche 22 im Basiselement 3 vorgesehen (vgl. die Figuren 3 und 5). Die Stege 35 sind an dieser inneren Stirnfläche 22 befestigt. Treten mechanische Belastungen der Schutzplatte auf, werden diese über die Befestigungsfläche 10 in Richtung der Längsachse des Verbindungszapfens 30 in diesen eingeleitet. Durch die Befestigung der Stege 35 an der inneren Stirnfläche 22 entsteht eine Scherfläche an der Grenzfläche zwischen Steg 35 und innerer Stirnfläche 22. Durch die in den Verbindungszapfen 30 eingeleitete mechanische Belastung lässt sich über die Größe dieser Scherfläche der Versagenspunkt der Stege 35 und somit des Verbindungszapfens 30 und der Befestigungsanordnung 1 festlegen. Die Größe der Scherfläche ist über die Stegbreite und die Dicke des Basiselements 3 gezielt einstellbar.

Die Stege 35 des Verbindungszapfens 30 dienen somit als Sollbruchstelle bei zu hohen mechanischen Belastungen der Befestigungsanordnung 1. Gleichzeitig nehmen sie auch federnd Lasten unterhalb ihrer Maximalbelastung auf und unterstützen dadurch die Stabilität der Befestigungsanordnung 1.

Der Verbindungszapfen 30 ist vorzugsweise konisch ausgebildet, wie es in Fig. 4 dargestellt ist. Dies erleichtert ein Einsetzen des Verbindungszapfens 30 in die Zapfenaufnahme 60 (siehe unten). Es sind ebenfalls andere Formgestaltungen denkbar, solange der Verbindungszapfen 30 verlässlich in der Zapfenaufnahme 60 aufnehmbar ist.

Der Verbindungszapfen 30 weist einen Hinterschnitt mit einer Haltefläche 33 auf. Nach dem Einsetzen des Verbindungszapfens 30 in die Zapfenaufnahme 60 hintergreifen Schnapphaken 80 (vgl. Figuren 2, 8, 10) den Hinterschnitt. Halteflächen 85 der Schnapphaken 80 greifen an der Haltefläche 33 des Hinterschnitts an, um das Basiselement 3 optimal am Kopplungselement 5 zu befestigen. Vorzugsweise sind die Schnapphaken 80 derart an den Hinterschnitt des Verbindungszapfens 30 angepasst, dass sich eine flächige Anlage und keine punktförmige oder linienförmige Anlage zwischen den Halteflächen 33 und 85 ergibt.

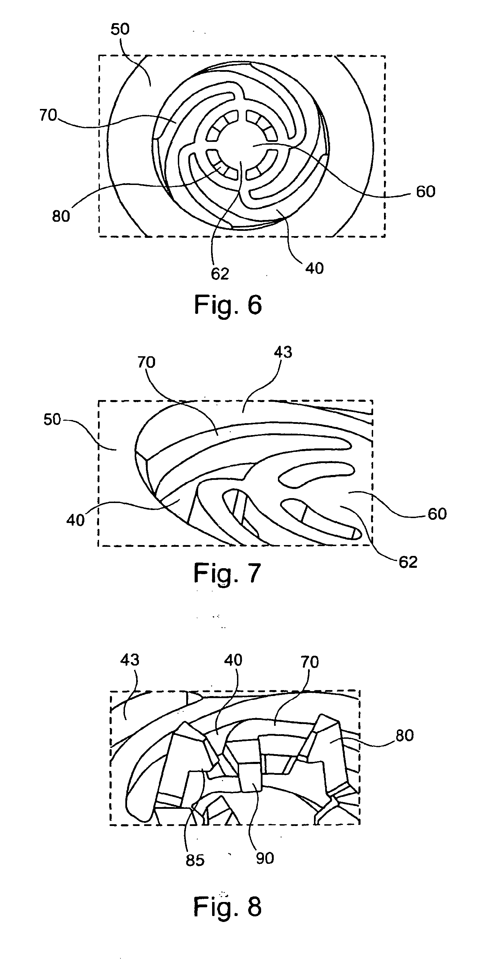

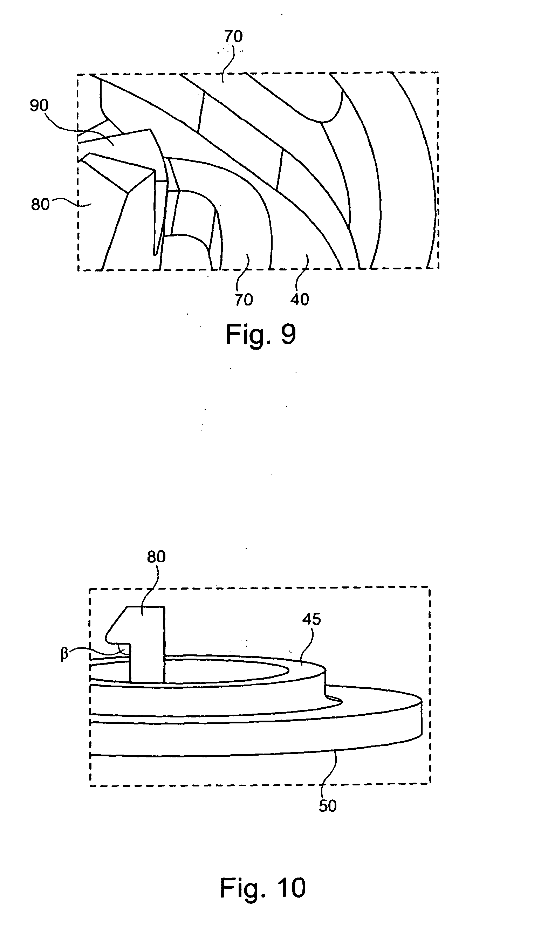

Die Haltefläche 33 des Verbindungszapfens 30 und die Längsachse mindestens eines Stegs 35 schließen einen Winkel a ein, wie es in Fig. 4 veranschaulicht ist. In Abhängigkeit von der Größe des Winkels a ergibt sich eine lösbare oder nicht lösbare Verbindung zwischen dem Basiselement 3 und dem Kopplungselement 5. Daher wird der Winkel a vorzugsweise mit einer Größe von 90° bis 120° gewählt. Entsprechend dem Winkel a wird ebenfalls ein Winkel ß zwischen der Längsachse des Schnapphakens 80 und seiner Haltefläche 85 angepasst (vgl. Figuren 8 und 10). Der Winkel ß hat ebenfalls eine Größe in einem Bereich von 90° bis 120°. Weisen die beiden Winkel a und ß eine Größe von 90° auf, liegt eine nicht zerstörungsfrei lösbare Verbindung zwischen dem Verbindungszapfen 30 und der Zapfenaufnahme 60 vor. Weisen die beiden Winkel a und ß oder nur einer der beiden Winkel a und ß eine Größe im Intervall von 90°< a, ß < 120°, vorzugsweise eine Größe zwischen 100° und 110° auf, liegt eine zerstörungsfrei lösbare Verbindung zwischen Verbindungszapfen 30 und Zapfenaufnahme 60 vor. Dieses Lösen der Verbindung erfolgt durch Herausziehen des Verbindungszapfens 30 aus der Zapfenaufnahme 60, während das Lösen der Verbindung durch einen möglichst großen Winkel a und/oder ß von vorzugsweise 120° unterstützt wird.

Fig. 6 zeigt eine Ansicht des Kopplungselements 5 in Draufsicht auf die Befestigungsfläche 50. Die Befestigungsfläche 50 ist vorzugsweise ringförmig um eine Öffnung 40 im Kopplungselement 5 ausgebildet. Innerhalb der Öffnung 40 ist die Zapfenaufnahme 60 in alle drei Raumrichtungen federnd angeordnet. Diese federnde Anordnung ist über flexible, spiralförmig verlaufende Stege 70 realisiert. Aufgrund ihrer Form ermöglichen die spiralförmig verlaufenden Stege 70 ein Ausweichen der Zapfenaufnahme 60 innerhalb der Öffnung 40 in alle drei Raumrichtungen. Durch diese Konstruktion wird ein Toleranzausgleich bereitgestellt, der beispielsweise ein unterschiedliches Dehnungsverhalten von verschiedenen Materialien ausgleicht.

Wie man in Fig. 7 erkennen kann, sind die spiralförmig verlaufenden Stege 70 an der inneren Stirnfläche 43 der Öffnung 40 befestigt. Um ein Ausweichen der Zapfenaufnahme 60 senkrecht zur Befestigungsfläche 50 zu gewährleisten, ist die innere Stirnfläche 43 vorzugsweise durch einen ringförmigen Vorsprung 45 am Rand der Öffnung 40 vergrößert. Durch die vergrößerte innere Stirnfläche 43 können die spiralförmig verlaufenden Stege 70 derart an der inneren Stirnfläche 43 positioniert und befestigt werden, dass die Unterseite 62 der Zapfenaufnahme 60 außerhalb der Ebene der Befestigungsfläche 50 angeordnet ist. Dies ermöglicht ein federndes Ausweichen der Zapfenaufnahme 60 auch in Richtung eines nicht gezeigten und an der Befestigungsfläche 50 angeklebten CKF-Rumpfteils.

Zudem umfasst die Zapfenaufnahme 60 vorzugsweise Zentrierstege 90. Diese sind konzentrisch um die Mitte der Zapfenaufnahme 60 angeordnet. Beim Einsetzen des Verbindungszapfens 30 in die Zapfenaufnahme 60 richten sie diesen innerhalb der Zapfenaufnahme 60 aus. Aus diesem Grund ist die Form der Zentrierstege 90 vorzugsweise komplementär zur anliegenden Form des Verbindungszapfens 30 ausgebildet.

Ein Verfahren zur Anwendung der Befestigungsanordnung 1, beispielsweise zum Befestigen von Schutzplatten an einem CFK-Flugzeugrumpf oder zum Halten von Karosserie- oder Verkleidungsteilen an Fahrzeugen, lässt sich folgendermaßen zusammenfassen. Zunächst wird eine Mehrzahl von Basiselementen 3 in vordefinierter Anordnung auf die Rückseite einer Schutzplatte geklebt. Danach wird die gleiche Anzahl an Kopplungselementen 5 in entsprechender Anordnung auf die Außenseite des CFK-Rumpfteils geklebt. Abschließend wird die Schutzplatte am CFK-Rumpfteil befestigt, indem durch Aufbringen einer Druckkraft senkrecht zur Fläche der Schutzplatte die einzelnen Verbindungszapfen 30 der Basiselemente 3 in die gegenüberliegend angeordneten Zapfenaufnahmen 60 der Kopplungselemente 5 eingerastet werden.

In Abhängigkeit von den bereits oben beschriebenen Klebealternativen lassen sich das Basiselement 3 und das Kopplungselement 5 über unterschiedliche Klebeverfahren an der Schutzplatte und dem CFK-Rumpfteil befestigen. Des Weiteren lassen sich die Schutzplatten über eine geeignete Ausbildung von Hinterschnitt und Schnapphaken wieder vom CFK-Rumpfteil lösen, indem die Befestigungsanordnung auf Zug in Richtung der Längsachse des Verbindungszapfens 30 belastet wird.

## Patentansprüche

1. Befestigungsanordnung (1) für ein Flächenelement, insbesondere eine Schutzplatte im Flugzeugbau, die ein Basiselement (3) und ein Kopplungselement (5) aufweist, die über eine lösbare oder eine nicht lösbare Schnappverbindung aneinander befestigbar sind, wobei das Basiselement (3) die folgenden Merkmale aufweist:
a. das Basiselement (3) ist zweiseitig ausgebildet mit
b. einer Befestigungsfläche (10) an seiner ersten Seite und einem von seiner zweiten Seite vorstehenden Verbindungszapfen (30),
c. mit dem eine Schnappverbindung zum Kopplungselement (5) herstellbar ist, und
wobei das Kopplungselement (5) die folgenden Merkmale aufweist:
d. das Kopplungselement (5) ist zweiseitig ausgebildet mit
e. einer Befestigungsfläche (50) an seiner ersten Seite und
f. einer Zapfenaufnahme (60) für den Verbindungszapfen (30) des Basiselements (3) an seiner zweiten Seite, während
g. das Kopplungselement (5) eine Öffnung (40) aufweist, in der spiralförmig verlaufende Stege (70) befestigt sind, die die Zapfenaufnahme (60) in alle drei Raumrichtungen federnd halten.

2. Befestigungsanordnung (1) gemäß Anspruch 1, dessen Verbindungszapfen (30) einen Hinterschnitt mit einer Haltefläche (33) aufweist, der über eine Mehrzahl von Stegen (35) am Basiselement (3) befestigt ist, und dessen Befestigungsfläche (10) zum Herstellen einer Klebeverbindung ausgelegt ist.

3. Befestigungsanordnung (1) gemäß Anspruch 2, dessen Befestigungsfläche (10) eine Öffnung (20) mit einer inneren Stirnfläche (22) aufweist, an der die Mehrzahl der Stege (35) befestigt ist.

4. Befestigungsanordnung (1) gemäß Anspruch 2, dessen Haltefläche (33) des Hinterschnitts des Verbindungszapfens (30) mit zumindest einem der Stege (35) einen Winkel (α) zwischen 90° und 120° einschließt, vorzugsweise einen Winkel (α) von 90° oder 100° bis 110°.

5. Befestigungsanordnung (1) gemäß Anspruch 1, dessen Zapfenaufnahme (60) eine Mehrzahl von federnd angeordneten Schnapphaken (80) mit einer Haltefläche (85) aufweist, während die Haltefläche (85) mit der Längsachse des Schnapphakens (80) einen Winkel (β)von 90° bis 120° einschließt, vorzugsweise einen Winkel (β) von 90° oder 100 bis 110°.

6. Befestigungsanordnung (1) gemäß Anspruch 1, dessen Zapfenaufnahme (60) auβerhalb der Ebene der Befestigungsfläche (50) angeordnet ist, um eine Bewegung der Zapfenaufnahme (60) senkrecht zur Befestigungsfläche (50) zu gestatten, während die Befestigungsfläche (50) zum Herstellen einer Klebeverbindung ausgelegt ist.

7. Verfahren zum Befestigen eines zu befestigenden Teils mittels einer Befestigungsanordnung (1) gemäß einem der Ansprüche 1-6 an einem tragenden Teil, beispielsweise zum Befestigen von Schutzplatten an einem CFK-Flugzeugrumpf oder zum Halten von Karosserie- oder Verkleidungsteilen an Fahrzeugen, das die folgenden Schritte aufweist:
a. Kleben einer Mehrzahl von Basiselementen (3), in vordefinierter Anordnung auf eine Rückseite eines zu befestigenden Teils, insbesondere die Schutzplatte,
b) Kleben einer Mehrzahl von Kopplungselementen (5), in einer der vordefinierten Anordnung entsprechenden Anordnung auf eine Außenseite eines tragenden Teils, insbesondere die Außenseite eines CFK-Rumpfteils, und
c. Befestigen des zu befestigenden Teils am tragenden Teil, insbesondere die Schutzplatte am CFK-Rumpfteil, indem durch Aufbringen einer Druckkraft senkrecht zur Fläche des zu befestigenden Teils, insbesondere der Schutzplatte, einzelne Verbindungszapfen (30) der Basiselemente (3) in gegenüberliegend angeordneten Zapfenaufnahmen (60) der Kopplungselemente (5) eingerastet werden.

8. Verfahren gemäß Anspruch 7, in dem das Kleben durch Aufbringen von doppelseitig klebenden Klebepads und/oder mit UV-Licht aktivierbarem Klebstoff erfolgt.

## Claims

1. A fastening arrangement (1) for a surface element, especially a protective plate in aircraft construction, that has a base element (3), and a coupling element (5), which can be fastened together by a detachable or a non-detachable snap connection, the base element (3) comprising the following features:
a. the base element (3) is built two-sided with
b. a seat (10) on its first side and a connecting pin (30) projecting from its second side,
c. with which a snap connection to the coupling element (5) can be produced, and
the coupling element (5) comprising the following features:
d. the coupling element (5) is built two-sided with
e. a seat (50) on its first side, and
f. a pin receiver (60) for the connecting pin (30) of the base element (37) on its second side, while
g. the coupling element (5) has an opening (40) in which webs (70) that extend in a spiral shape are fastened, and that hold the pin receiver (60) resiliently in all three spatial directions.

2. The fastening arrangement (1) according to Claim 1, whose connecting pin (30) has an undercut with a holding surface (33), and that is fastened to the base element (3) by means of a plurality of webs (35), and whose seat (10) is designed for producing an adhesive bond.

3. The fastening arrangement (1) according to Claim 2, whose seat (10) has an opening (20) with an inner face (22), to which the plurality of webs (35) is fastened.

4. The fastening arrangement (1) according to Claim 2, whose holding surface (33) of the undercut of the connecting pin (30) encloses an angle (α) with at least one of the webs (35) of between 90° and 120°, preferably an angle (α) of 90° or 100° to 110°.

5. The fastening arrangement (1) according to Claim 1, whose pin receiver (60) has a plurality of resiliently arranged snap hooks (80) with a holding surface (85), while the holding surface. (85) encloses with the longitudinal axis of the snap hook (80) an angle (β) of 90° to 120°, preferably an angle (β) of 90° or 100 to 110°.

6. The fastening arrangement (1) according to Claim 1, whose pin receiver (60) is arranged outside of the plane of the seat (50) in order to allow a movement of the pin receiver (60) perpendicular to the seat (50), while the seat (50) is designed for producing an adhesive bond.

7. Method for mounting a part to be mounted by means of a fastening arrangement (1) according to one of the claims 1-6 on a supporting part, especially for mounting a protective plate on a CFRP-aircraft body or for retaining a car body or a covering part at motor vehicles, which comprises the following steps:
a. bonding a plurality of base elements (3) in a predefined arrangement to the back side of a part to be mounted, particularly a protective plate,
b. bonding a plurality of coupling elements (5) in an arrangement corresponding to the predefined arrangement to an outer side of a retaining part, in particular the outer side of a CFRP fuselage part, and
c. fastening the parts to be mounted on the supporting part, in particular the protective plate on said CFRP fuselage, by applying a compressive force perpendicular to the face of the part to be mounted, particularly the protective plate, so that individual connecting pins (30) of the base elements (3) are snapped into the oppositely arranged pin receivers (60) of the coupling elements (5).

8. Method according to claim 7, in which the bonding is realized by applying double-sided adhesive pads and/or by applying an adhesive which can be activated by ultraviolet light.

## Revendications

1. Agencement de fixation (1) pour un élément plan, en particulier une plaque de protection en construction aéronautique, qui présente un élément de base (3) et un élément d'accouplement (5), qui peuvent être fixés l'un contre l'autre par l'intermédiaire d'un assemblage encliquetable détachable ou non détachable, l'élément de base (3) présentant les caractéristiques suivantes :
a. l'élément de base (3) est constitué de deux faces avec
b. une surface de fixation (10) sur sa première face et un ergot d'assemblage (30) en saillie sur sa seconde face,
c. avec lequel un assemblage encliquetable est réalisable avec l'élément d'accouplement (5), et
l'élément d'accouplement (5) présentant les caractéristiques suivantes :
d. l'élément d'accouplement (5) est constitué de deux faces avec
e. une surface de fixation (50) sur sa première face et
f. un logement d'ergot (60) pour l'ergot d'assemblage (30) de l'élément de base (3) sur sa seconde face, tandis que
g. l'élément d'accouplement (5) présente une ouverture (40) dans laquelle sont fixées les ailettes (70) s'étendant en spirale qui maintiennent élastiquement le logement d'ergot (60) dans les trois directions spatiales.

2. Agencement de fixation (1) selon la revendication 1, dont l'ergot d'assemblage (30) présente une découpe arrière avec une surface de retenue (33) qui est fixée sur l'élément de base (3) par une pluralité d'ailettes (35), et dont la surface de fixation (10) est destinée à fabriquer un assemblage collé.

3. Agencement de fixation (1) selon la revendication 2, dont la surface de fixation (10) présente une ouverture (20) avec une surface frontale interne (22) contre laquelle est fixée la pluralité d'ailettes (35).

4. Agencement de fixation (1) selon la revendication 2, dont la surface de retenue (33) de la découpe arrière de l'ergot d'assemblage (30) forme avec au moins une des ailettes (35) un angle (α) de 90° à 120°, de préférence un angle (α) de 90° ou de 100° à 110°.

5. Agencement de fixation (1) selon la revendication 1, dont le logement d'ergot (60) présente une pluralité de crochets encliquetables (80) disposés élastiquement avec une surface de retenue (85), tandis que la surface de retenue (85) forme avec l'axe longitudinal du crochet encliquetable (80) un angle (β) de 90° à 120°, de préférence un angle (β) de 90° ou de 100° à 110°.

6. Agencement de fixation (1) selon la revendication 1, dont le logement d'ergot (60) est situé à l'extérieur du plan de la surface de fixation (50) pour autoriser un mouvement du logement d'ergot (60) perpendiculairement à la surface de fixation (50), tandis que la surface de fixation (50) est destinée à fabriquer un assemblage collé.

7. Procédé de fixation d'un élément à fixer au moyen d'un agencement de fixation (1) selon une des revendications 1 à 6 sur une pièce porteuse, par exemple pour fixer des plaques de protection sur un fuselage d'avion en matière plastique renforcée de fibres de carbone ou pour retenir des pièces de carrosserie ou d'habillage de véhicules comprenant les étapes suivantes :
a. collage d'une pluralité d'éléments de base (3), dans un agencement prédéfini sur une face arrière d'une pièce à fixer, en particulier la plaque de protection,
b. collage d'une pluralité d'éléments d'accouplement (5), dans un agencement correspondant à l'agencement prédéfini sur une face externe d'une pièce porteuse, en particulier la face externe d'une pièce de fuselage en matière plastique renforcée de fibres de carbone, et
c. fixation de la pièce à fixer sur la pièce porteuse, en particulier la plaque de protection sur le fuselage en matière plastique renforcée de fibres de carbone, dans la mesure où par application d'une force de pression perpendiculaire à la surface de la pièce à fixer, en particulier de la plaque de protection, différents ergots d'assemblage (30) des éléments de base (3) sont enclenchés dans des logements d'ergot (60) opposés des éléments d'accouplement (5).

8. Procédé selon la revendication 7, dans lequel le collage a lieu par application de patins adhésifs double face et/ou avec un adhésif activable à la lumière UV.
